# EUROPÄISCHE PATENTSCHRIFT

(11) **EP 0 457 971 B1**
(45) Veröffentlichungstag und Bekanntmachung des Hinweises auf die Patenterteilung: **04.05.1994**
(21) Anmeldenummer: 90125549.7
(22) Anmeldetag: 27.12.1990
(51) Int. Cl.: A47J 39/00, A47J 27/16, B05B 7/24, B05B 7/00

(54) **Dampf-Gargerät**
Cooking appliance using steam
Appareil de cuisson à vapeur

(30) Priorität: 27.04.1990 DE 4013596
(43) Veröffentlichungstag der Anmeldung: 27.11.1991
(73) Patentinhaber: ELOMA GmbH BEDARFSARTIKEL ZUR GEMEINSCHAFTSVERPFLEGUNG, D-82216 Maisach (DE)
(72) Erfinder: Spann, Gustav, W-8080 Emmering (DE)
(74) Vertreter: Bohnenberger, Johannes, Dr.

(56) Entgegenhaltungen:
- EP-A- 0 244 538
- EP-A- 0 278 889
- DE-A- 3 700 894
- GB-A- 542 533

## Beschreibung

Die Erfindung betrifft ein Dampf-Gargerät nach dem Oberbegriff des Patentanspruches 1.

Ein derartiges Dampf-Gargerät ist beispielsweise aus der DE 37 00 894 A1 bekannt. Bei diesem Dampf-Gargerät wird Wasser im wesentlichen drucklos auf die Nabe des Gebläse-Schaufelrades getropft, von dort nach außen geschleudert und mit dem Luftstrom der das Gebläserad umgebenden Heizung zugeführt. Bei einem derartigen Gerät besteht das Problem, daß das Wasser möglichst fein verteilt in den Luftstrom gelangen soll, bevor es von den Schaufeln des Gebläse-Schaufelrades und die in diesem Bereich bestehenden Luft-Turbulenzen weiter verteilt wird.

Aus der EP-A 244 538 ist ein Dampf-Gargerät bekannt, bei welchem das Wasser ins Innere einer konzentrisch an der Nabe befestigten und mit dieser rotierenden Bechereinheit strömt. Die Bechereinheit ist auf einer Seite offen, so daß das Wasser kontinuierlich über ihren Rand ausströmt und bei drehendem Gebläserad in Umfangsrichtung verteilt wird. Beim bekannten Dampf-Gargerät hängt die Verteilungswirkung von der Drehzahl des Gebläserades ab. Bei niedrigen Drehzahlen ist die Verteilungswirkung entsprechend niedrig. Darüber hinaus ist die bekannte Bechereinheit auf die Verwendung eines bestimmten Gebläsetyps beschränkt, wenn man nicht einen gesonderten und damit aufwendigen Antrieb vorsehen will.

Der Erfindung liegt die Aufgabe zugrunde, ein Dampf-Gargerät der eingangs genannten Art dahingehend weiterzubilden, daß mit einfachen Mitteln eine möglichst günstige Verteilung des zugeführten Wassers sichergestellt wird.

Diese Aufgabe wird durch die im Kennzeichen des Patentanspruches 1 angegebenen Merkmale gelöst.

Ein wesentlicher Gedanke der Erfindung liegt darin, daß die drucklose Zuführung von Wasser beibehalten bleibt, der Luftstrom aber zur Verteilung bzw. Vernebelung des Wassers benutzt wird. Es besteht somit bei einem solchen Gerät keinerlei Gefahr von Verkalkung, wie dies bei Druckzerstäubung von Wasser mittels Düsen der Fall ist. Das Grundprinzip beruht hierbei auf der Venturi-Wirkung in ihrer allgemeinsten Form, also der Zerstäubung von Wasser in Luft-Unterdruckbereichen.

Vorzugsweise sind die Luftleiteinrichtungen so ausgebildet, daß an einem Punkt zugeführtes Wasser sich nach unten rieselnd über eine größer werdende Fläche verteilt. Innerhalb dieser größer werdenden Fläche wird dann das Wasser von einem zu seiner Strömungsrichtung senkrechten Luftstrom mitgerissen. Dies kann beispielsweise so geschehen, daß die Luftleiteinrichtungen eine siebartige Fläche umfassen, der in ihrem oberen Bereich das Wasser über einige wenige Austrittsöffnungen zugeführt wird. Das Wasser rieselt dann die siebartige Fläche hinab und wird von dem durchtretenden Luftstrom mitgerissen. Hierfür ist die siebartige Fläche vor einer Ansaugöffnung des Gebläse-Schaufelrades angeordnet.

Alternativ oder auch zusätzlich können die Luftleiteinrichtungen eine Riesel-Kaskade umfassen, deren einzelne Rieselbleche derart übereinander angeordnet sind, daß der Luftstrom horizontal zwischen ihnen unter Mitnahme der Wassertropfen hindurchströmen kann.

Bei einer anderen Ausführungsform der Erfindung, die ebenfalls zusätzlich Verwendung finden kann, umfassen die Luftleiteinrichtungen einen Wasserausströmkörper mit mehreren, in Axialrichtung des Gebläse-Schaufelrades gesehen axial hintereinanderliegenden Austrittsöffnungen. Vorzugsweise sind zwischen den Austrittsöffnungen Trennwände derart angebracht, daß aus den Austrittsöffnungen austretendes Wasser in Teilströmen nach unten geführt wird. Hierbei ist der Wasserausströmkörper vorzugsweise derart relativ zum Gebläse-Schaufelrad angeordnet, daß er im wesentlichen im Zentrum eines sich im Ansaugluftstron ausbildenden Luftwirbels liegt. Somit werden Wassertröpfchen nicht nur vom Unterrand des Austrittskörpers fortgerissen, sondern vielmehr über seinen gesamten Umfangsbereich.

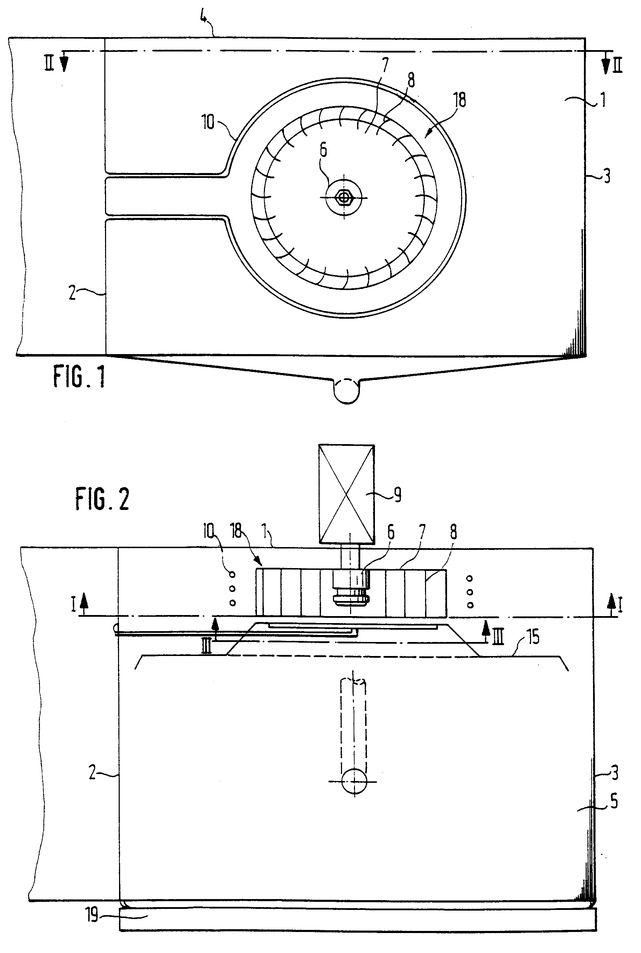

Weitere wesentliche Merkmale ergeben sich aus den Unteransprüchen und der nachfolgenden Beschreibung bevorzugter Ausführungsformen der Erfindung, die anhand von Abbildungen näher erläutert werden. Hierbei zeigen
- Fig. 1: eine schematisierte Vertikalschnittansicht eines Dampf-Gargerätes,
- Fig. 2: einen Schnitt entlang der Linie II-II aus Fig. 1,
- Fig. 3: einen schnitt entlang der Linie III-III aus Fig. 2,
- Fig. 4: eine schematisierte Vorderansicht auf ein Gebläse-Schaufelrad mit davor angeordneter Riesel-Kaskade,
- Fig. 5: eine schematisierte Längsschnitt-Ansicht durch ein Schaufelrad mit darin angeordnetem Wasserausströmkörper, und
- Fig. 6: einen Schnitt entlang der Linie VI-VI aus Fig. 5.

Das Dampf-Gargerät besteht aus einem geschlossenen Raum mit einer Rückwand 1, mit Seitenwänden 2 und 3, einer Decke 4, einem Boden 5 und einer Tür 17 an der Vorderseite. An der Rückwand 1 ist ein Schaufelrad 18 gelagert, das eine Nabe 6, eine Scheibe 7 und Umfangsschaufeln 8 aufweist. Zum Antrieb des Schaufelrades 18 ist ein Elektromotor 9 vorgesehen, der außerhalb des Gehäuses angeordnet ist. Das Schaufelrad 18 ist von einer Heizung 10 umgeben.

Das Schaufelrad mit der Heizung 10 ist gegenüber dem eigentlichen Garraum, in den die Speisen einbringbar sind, über eine abnehmbare Abdeckung 15 getrennt. Die Abdeckung 15 ist so ausgebildet, daß eine Luft-(und Dampf-) Zirkulation durch das Gebläserad 18 aufrechterhalten werden kann. Die Ansaug-Öffnung der Abdeckung 15 ist in Fig. 2 mit einer unterbrochenen Linie dargestellt, um anzudeuten, daß hier ein relativ engmaschiges und vorzugsweise mehrlagiges Sieb angebracht ist, welches Speise- und insbesondere Fettpartikel aus dem in das Gebläserad 18 eintretenden Luftstrom fernhalten soll.

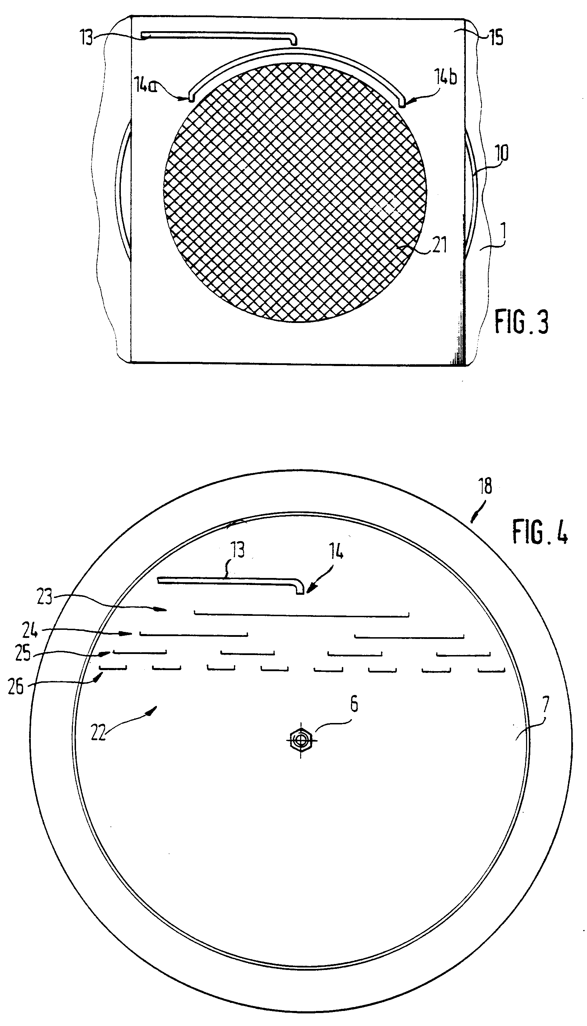

Bei der in den Fig. 2 und 3 erläuterten Ausführungsform der Erfindung befindet sich hinter dem soeben beschriebenen Fett-Filter ein weiteres Sieb 21. Im oberen Bereich des Siebes 21 ist eine Wasserzuführungsleitung 13 mit zwei Austrittsöffnungen 14a und 14b so angeordnet, daß aus den Wasseraustrittsöffnungen 14a, 14b austretendes Wasser direkt auf das Sieb 21 geführt wird. Das Sieb 21 ist hierbei so gestaltet (diagonale Gitterverläufe), daß das ausströmende Wasser über eine sich vergrößernde Fläche beim Strömen nach unten verteilt wird. Im Verlauf seines Herabströmens wird das Wasser vom Luftstrom mitgerrissen, der durch die Maschen des Siebes hindurchtritt und dort eine höhere Strömungsgeschwindigkeit (und damit einen niedrigeren Druck) aufweist, als vor und hinter den einzelnen Sieb-Stäben. Das so in den Luftstrom gelangende Wasser wird von den Schaufeln 8 weiter verteilt und der Heizung 10 zugeführt. Als Sieb 21 eignet sich besonders auch Streckmetall entsprechender Formgebung.

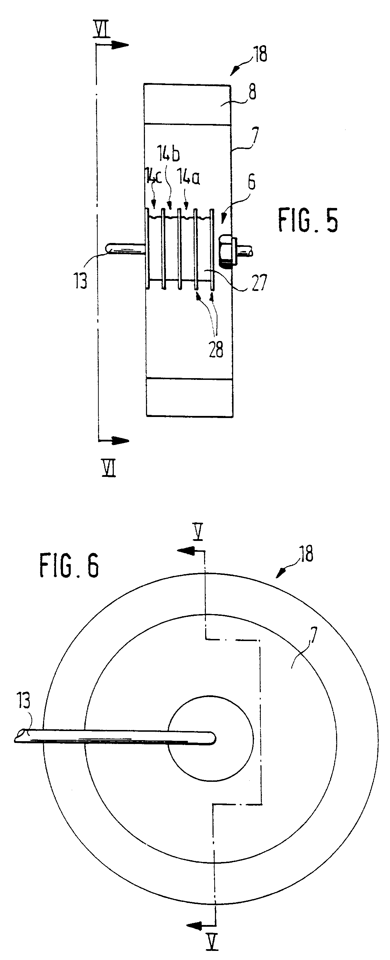

Bei der in Fig. 4 gezeigten Alternative ist anstelle eines Siebes 21 eine Riesel-Kaskade 22 im Bereich der Ansaugöffnung des Gebläse-Schaufelrades 18 vorgesehen. Diese ist aus einer in an sich bekannten Weise ausgebildeten Gruppe von Rieselblechen 23, 24, 25 und 26 aufgebaut und so angeordnet, daß Wasser, welches aus der Austrittsöffnung 14 in das oberste Rieselblech 23 gelangt, über dessen Ränder strömen und in zwei darunter liegende Rieselbleche 24 gelangen kann. Aus den zwei Rieselblechen 24 gelangt das Wasser in vier Rieselbleche 25 und von dort in acht Rieselbleche 26. Der so aufgeteilte Wasserstrom ist feinverteilt genug, um von der in das Gebläse-Schaufelrad 18 strömenden Luft mitgerissen zu werden, bevor die einzelnen Wassertropfen zu Boden fallen.

Bei der weiteren bevorzugten Ausführungsform der Erfindung, die in den Fig. 5 und 6 dargestellt ist, befindet sich ein Wasserausströmkörper 27 im wesentlichen mittig innerhalb des Gebläse-Schaufelrades 18. Der Wasserausströmkörper 27 ist im wesentlichen zylindrisch mit einem relativ großen Durchmesser ausgebildet und weist in seinem oberen Bereich Austrittsöffnungen 14a, 14b, 14c usw. auf. Die Austrittsöffnungen 14a - 14c sind mittels Trennwänden 28 voneinander getrennt, so daß Wasser, welches aus den Austrittsöffnungen 14a - 14c die Umfangswand des Wasserausströmkörpers 27 (auf beiden Seiten) nach unten fließt, jeweils vom Nachbarstrom getrennt bleibt. Dadurch, daß sich der Wasserausströmkörper 27 im Zentrum des Gebläse-Schaufelrades 18 befindet, liegt er genau in dem Bereich, in welchem sich eine Wirbelströmung rings um den Wasserausströmkörper 27 bei Betrieb des Gebläse-Schaufelrades 18 ausbildet. Dadurch strömt Luft rings um den Wasserausströmkörper 27 und nimmt dabei Wasser in feinverteilter Form mit, welches dann zusammen mit der geforderten Luft in Richtung auf die Heizung 10 geblasen wird.

Aus obiger Beschreibung geht hervor, daß ein wesentlicher Punkt der Erfindung darin besteht, daß Wasser mit Hilfe der beim Betrieb des Dampf-Gargerätes ohnehin notwendigen Luft- (bzw. Dampf-) Strömung zumindest zu einem gewissen Ausmaß so zerstäubt und verteilt wird, daß durch das GebläseSchaufelrad eine weitere und spätestens dann hinreichende Feinverteilung des Wassers möglich ist.

## Patentansprüche

1. Dampf-Gargerät zum Garen von Nahrungsmitteln in einem geschlossenen Garraum mit mindestens einer Wasserzuführungsleitung (13), mit mindestens einer Austrittsöffnung (14), mit einer Heizung (10) und mit einem Gebläse-Schaufelrad (18) mit Schaufeln (8) zur Erzeugung eines Luftstroms, wobei die Austrittsöffnung(en) in dem Ansaugstrom des Gebläse-Schaufelrades (18) angeordnet ist,
**dadurch gekennzeichnet,**
daß das Wasser in mindestens einen Zwischenraum gelangt, der mindestens eine weitere Austrittsöffnung aufweist, so daß das im wesentlichen drucklos aus der ersten Austrittsöffnung(en) ausströmende Wasser unter der Wirkung des Luftstroms tröpfchenweise in diesen gelangt.

2. Dampf-Gargerät nach Anspruch 1, dadurch gekennzeichnet, daß die Luftleiteinrichtungen Mittel umfassen, über welche strömendes Wasser über eine sich nach unten vergrößernde Fläche verteilbar ist.

3. Dampf-Gargerät nach einem der vorhergehenden Ansprüche, dadurch gekennzeichnet, daß die Luftleiteinrichtungen eine siebartige Fläche (21) umfassen, welcher in einem oberen Bereich Wasser zuführbar ist, und die im wesentlichen senkrecht vor einer Ansaugöffnung des Gebläse-Schaufelrades (18) angeordnet ist.

4. Dampf-Gargerät nach einem der vorhergehenden Ansprüche, dadurch gekennzeichnet, daß die Luftleiteinrichtungen eine Riesel-Kaskade (22) umfassen, deren einzelne Rieselbleche (23 - 26) derart übereinander angeordnet sind, daß der Luftstrom horizontal zwischen ihnen unter Mitnahme von Wassertropfen hindurchströmen kann.

5. Dampf-Gargerät nach einem der vorhergehenden Ansprüche, dadurch gekennzeichnet, daß die Luftleiteinrichtungen einen Wasserausströmkörper (27) mit mehreren, in Axialrichtung des Gebläse-Schaufelrades (18) gesehen axial hintereinander liegenden Austrittsöffnungen (14a - 14c) umfaßt.

6. Dampf-Gargerät nach Anspruch 5, dadurch gekennzeichnet, daß zwischen den Austrittsöffnungen (14a - 14c) Trennwände (28) derart angeordnet sind, daß aus den Austrittsöffnungen (14a - 14c) austretendes Wasser in Teilströmen fuhrbar ist.

7. Dampf-Gargerät nach einem der Ansprüche 5 oder 6, dadurch gekennzeichnet, daß der Wasserausströmkörper (27) deart relativ zum Gebläse-Schaufelrad (18) angeordnet ist, daß er im wesentlichen im Zentrum eines sich im Ansaug-Luftstrom ausbildenden Luftwirbels liegt.

## Claims

1. A steam cooking device for cooking food in an enclosed cooking chamber comprising at least one water supply pipe (13), at least one discharge opening (14), heating means (1) , and a fan impeller (18) including vanes (8) for generating an airflow, the discharge opening(s) being disposed in the intake flow of the fan impeller, characterised in that the water flows into at least one intermediate space provided with a further discharge opening so that the water, which exits substantially unpressurized from the first discharge opening(s), under the action of the airflow enters the same dropwise.

2. The steam cooking device as claimed in claim 1, characterised in that the air guide means comprises means through which flowing water may be distributed across a downwardly widening surface area.

3. The steam cooking device as claimed in one of the preceding claims, characterised in that the air guide means comprise a screen-like area (21) to an upper portion of which water may be supplied and which is disposed substantially vertically in front of an intake opening of the fan impeller (18).

4. The steam cooking device as claimed in one of the preceding claims, characterised in that the air guide means comprise a falling-film cascade (22) the individual shower trays (23-26) of which are stacked above one another such that the airflow is permitted to pass therethrough horizontally while entraining droplets of water.

5. The steam cooking device as claimed in one of the preceding claims, characterised in that the air guide means comprise a water discharge body (27) having a plurality of axially aligned discharge openings (14a-14c) as viewed in the axial direction of the fan impeller (18).

6. The steam cooking device as claimed in claim 5, characterised in that partitions (28) are disposed intermediate the discharge openings (14a-14c) in such a way that water discharged from said discharge openings (14a-14c) may be guided in the form of subflows.

7. The steam cooking device as claimed in one of the claims 5 or 6, characterised in that the water discharge body (27) is disposed relative to the fan impeller (18) in such a way as to be substantially disposed in the centre of an air vortex building up in the intake airflow.

## Revendications

1. Appareil de cuisson à la vapeur pour la cuisson d'aliments dans une chambre close, comportant au moins une conduite d'amenée d'eau (13), au moins un orifice de sortie (14), un dispositif de chauffage (10) et une roue à ailettes de ventilateur (18) dont les ailettes (8) produisent un courant d'air, l'orifice ou les orifices de sortie étant placé(s) dans le courant d'aspiration de la roue à ailettes de ventilateur (18), caractérisé par le fait que l'eau arrive dans au moins un espace intermédiaire qui présente au moins un autre orifice de sortie, de sorte que l'eau qui sort pratiquement sans pression du premier ou des premiers orifices de sortie arrive dans cet espace intermédiaire par gouttelettes sous l'action du courant d'air.

2. Appareil de cuisson à la vapeur selon la revendication 1, caractérisé par le fait que les dispositifs qui dirigent l'air comprennent des moyens sur lesquels l'eau qui coule peut se disperser sur une surface qui augmente vers le bas.

3. Appareil de cuisson à la vapeur selon l'une des revendications précédentes, caractérisé par le fait que les dispositifs qui dirigent l'air comprennent une surface du genre tamis (21) dans une partie supérieure de laquelle de l'eau peut être amenée et qui est placée sensiblement normalement devant un orifice d'aspiration de la roue à ailettes de ventilateur (18).

4. Appareil de cuisson à la vapeur selon l'une des revendications précédentes, caractérisé par le fait que les dispositifs qui dirigent l'air comprennent une cascade de ruissellement (22) dont les différentes plaques de ruissellement (23 à 26) sont placées les unes au-dessus des autres de façon telle que le courant d'air puisse passer horizontalement entre elles en entraînant des gouttes d'eau.

5. Appareil de cuisson à la vapeur selon l'une des revendications précédentes, caractérisé par le fait que les dispositifs qui dirigent l'air comprennent un corps émetteur d'eau (27) ayant plusieurs orifices de sortie (14a à 14c) situés les uns derrière les autres dans la direction axiale de la roue à ailettes de ventilateur (18).

6. Appareil de cuisson à la vapeur selon la revendication 5, caractérisé par le fait que des cloisons (28) sont placées entre les orifices de sortie (14a à 14c) de façon telle que l'eau qui sort de ceux-ci puisse évoluer en courants partiels.

7. Appareil de cuisson à la vapeur selon l'une des revendications 5 et 6 caractérisé par le fait que le corps émetteur d'eau (27) est placé par rapport à la roue à ailettes de ventilateur (18) de façon à être sensiblement au centre d'un tourbillon d'air qui se forme dans le courant d'air d'aspiration.
